# EUROPEAN PATENT SPECIFICATION

(11) **EP 2 857 408 B1**
(45) Date of publication and mention of the grant of the patent: **20.09.2017**
(21) Application number: 13797369.9
(22) Date of filing: 29.05.2013
(51) Int. Cl.: C07F 9/6574, H01M 10/0568, H01M 10/0525, H01M 10/0567

(54) **METHOD FOR PRODUCING TETRAFLUORO(OXALATE)PHOSPHATE SOLUTION**
VERFAHREN ZUR HERSTELLUNG EINER TETRAFLUOR(OXALAT)PHOSPHATLÖSUNG
PROCÉDÉ DE FABRICATION D'UNE SOLUTION DE TÉTRAFLUORO(OXALATE)PHOSPHATE

(30) Priority: 30.05.2012 JP 2012122853
(43) Date of publication of application: 08.04.2015
(73) Proprietor: Central Glass Co., Ltd., Yamaguchi 755-0001 (JP)
(72) Inventor: KUBO, Makoto, Ube-shi Yamaguchi 755-0001 (JP); MORINAKA, Takayoshi, Ube-shi Yamaguchi 755-0001 (JP); NAKAHARA, Keita, Ube-shi Yamaguchi 755-0001 (JP); MURAMOTO, Satoshi, Ube-shi Yamaguchi 755-0001 (JP)
(74) Representative: Manitz Finsterwald Patentanwälte PartmbB
(86) International application number: PCT/JP2013/064902
(87) International publication number: WO 2013/180173

(56) References cited:
- WO-A2-2008/109802
- JP-A- 2003 137 890
- JP-A- 2003 137 890
- JP-A- 2003 212 879
- US-A1- 2011 183 219

## Description

### Technical Field

The present invention relates to a method of producing a tetrafluoro(oxalate)phosphate solution that is used in an additive for a non-aqueous electrolyte battery.

### Background Art

A tetrafluoro(oxalate)phosphate is used as an additive for a non-aqueous electrolyte battery. For example, lithium tetrafluoro(oxalate)phosphate is used as an additive for non-aqueous electrolyte batteries such as lithium-ion batteries and lithium-ion capacitors; and sodium tetrafluoro(oxalate)phosphate is used as an additive for sodium-ion batteries. As a method of producing lithium tetrafluoro(oxalate)phosphate as one of tetrafluoro(oxalate)phosphates, there is known a method wherein lithium hexafluorophosphate is reacted with oxalic acid in an organic solvent in the presence of a reaction assistant containing silicon tetrachloride (Patent Literature 1). In this method, since a lithium tetrafluoro(oxalate)phosphate solution is difficult to be refined by crystallization, it is significantly difficult to obtain lithium tetrafluoro(oxalate)phosphate in which the amounts of chlorine compounds and free acids, which adversely affect battery characteristics of non-aqueous electrolyte batteries, are low.

As another method of producing lithium tetrafluoro(oxalate)phosphate, there is known a method wherein phosphorus pentafluoride is reacted to a suspension of lithium oxalate in an organic solvent (Non Patent Literature 1). This method uses phosphorus pentafluoride, which is a highly toxic high-pressure gas, and is therefore dangerous and not practical.

JP 2003-137,890 A relates to a method of synthesizing an ionic metal complex by reacting a diketone compound with a halogen-containing compound in an organic solvent in the presence of cocatalysts including elements of groups I, II, III or IV in the periodic table.

US 2011/183,219 A1 relates to a method for producing a lithium difluorobis(oxalato)phosphate solution, comprising the steps of : (a) mixing lithium hexafluorophosphate and oxalic acid together in a nonaqueous solvent, in a manner that molar ratio of lithium hexafluorophosphate to oxalic acid falls within a range of 1:1.90 to 1:2.10, to prepare a mixture; and (b) adding silicon tetrachloride the mixture, in a manner that molar ratio of lithium hexafluorophosphate to silicon tetrachloride falls within a range of 1: 0. 95 to 1: 1.10, thereby conducting a reaction

### Prior Art Document:

### Patent Literature

Patent Literature 1: Japanese Patent No. 3907446

### Non-patent Literature

Non-patent Literature 1: Electrochemical and Solid-State Letters, 10, A241 (2007)

### Summary of Invention:

### Technical Problem:

In the method of synthesizing an ionic metal complex disclosed in Patent Literature 1, production of a complex in which the amounts of chlorine compounds and free acids are low is not considered at all, and the ionic metal complex prepared by the method shows significantly high affinity to the solvent and is therefore difficult to deposit by evaporation and drying. It is therefore difficult to purify the complex afterward by crystallization, and an improvement in the production is necessary to obtain an ionic metal complex in which the amounts of chlorine compounds and free acids are low such that purification in a post-process is not required. Accordingly, it is an object of the present invention to provide a method of safely producing a tetrafluoro(oxalate)phosphate solution in which the amounts of chlorine compound and free acid are low such that crystallization refinement is not required in post-process.

### Solution to Problem:

The present inventors have extensively studied to solve the above-mentioned problems in conventionally known technologies and, as a result, have found a method of safely producing a tetrafluoro(oxalate)phosphate solution in which the amounts of chlorine compounds and free acids are low such that purification is not required in a post-process, and have accomplished the present invention.

That is, the present invention relates to a method of producing a tetrafluoro(oxalate)phosphate solution, comprising mixing a hexafluorophosphate with oxalic acid in a non-aqueous solvent and adding silicon tetrachloride to the resulting mixture solution for reaction, wherein the addition ratio of the hexafluorophosphate, oxalic acid, and silicon tetrachloride is controlled such that the amount of the hexafluorophosphate is 1.90 moles or more and the amount of the oxalic acid is 1.90 to 2.10 moles, based on 1 mole of silicon tetrachloride.

The temperature when silicon tetrachloride is added for the reaction is preferably in a range of -10°C to 50°C.

Furthermore, the reaction solution after the addition of silicon tetrachloride to cause the reaction is preferably deaerated and concentrated. The deaeration and concentration are performed by a method of increasing the solute concentration in the reaction solution by discharging volatile components to the outside of the system of the reaction solution through a reduction in pressure or circulation of an inert gas, such as nitrogen or argon gas, or a carrier gas substantially not containing moisture, such as dry air, in the gas phase containing the volatile components from the reaction solution. The lower limit of the temperature during the deaeration and concentration is -20°C and preferably 10°C, and the upper limit of the temperature is 90°C and preferably 60°C. A temperature of less than -20°C during the deaeration and concentration causes not only a reduction in concentration efficiency but also a risk of solidification of the reaction solution. In contrast, a temperature higher than 90°C undesirably easily causes coloring or decomposition of the reaction solution and accordingly is not preferred.

The non-aqueous solvent is preferably at least one solvent selected from the group consisting of cyclic carbonates, linear carbonates, cyclic esters, linear esters, cyclic ethers, linear ethers, and nitriles.

The counter cation of the hexafluorophosphate is preferably at least one counter cation selected from the group consisting of a lithium ion, a sodium ion, a potassium ion, and a tetraalkylammonium ion.

The present invention also relates to a method of producing a tetrafluoro(oxalate)phosphate solution described above, wherein the tetrafluoro(oxalate)phosphate solution is characterized in that the chlorine ion concentration is 5 mass ppm or less and the free acid concentration is 250 mass ppm or less in terms of hydrofluoric acid, based on 1 mass% of the tetrafluoro(oxalate)phosphate.

The present invention also relates to a method of producing an electrolytic solution for a non-aqueous electrolyte battery comprising adding an electrolyte selected from the group consisting of LiPF₆, LiBF₄, LiClO₄, LiAsF₆, LiSbF₆, LiCF₃SO₃, LiN(SO₂F)₂, LiN(SO₂CF₃)₂, LiN(SO₂C₂F₅)₂, LiN(SO₂CF₃) (SO₂C₄F₉), LiC(SO₂CF₃)₃, LiPF₃(C₃F₇)₃, LiB(CF₃)₄ and LiBF₃(C₂F₅) to the tetrafluoro(oxalate)phosphate solution.

The present invention also relates to a method of producing a non-aqueous electrolyte battery comprising the electrolytic solution for a non-aqueous electrolyte battery.

### Effects by the Invention:

According to the present invention, a solution containing a tetrafluoro(oxalate)phosphate in which the amounts of chlorine compounds and free acids are low such that crystallization refinement is not required in a post-process can be safely produced.

### Description of Embodiments:

The oxalic acid used for producing the tetrafluoro(oxalate)phosphate of the present invention has hygroscopicity and forms a dihydrate if it is left to stand in air containing moisture. Commercially available dihydrates are therefore preferably dried for removing the crystal water. The drying may be performed by any method such as heating or vacuum drying. The moisture concentration of dried oxalic acid is preferably 1000 mass ppm or less and more preferably 300 mass ppm or less. A moisture concentration of higher than 1000 mass ppm readily hydrolyzes the hexafluorophosphate and the tetrafluoro(oxalate)phosphate and is therefore undesirable.

The non-aqueous solvent used for producing the tetrafluoro(oxalate)phosphate of the present invention is preferably at least one selected from the group consisting of cyclic carbonates, linear carbonates, cyclic esters, linear esters, cyclic ethers, linear ethers, and nitriles. Examples of the solvent include cyclic carbonates such as propylene carbonate, ethylene carbonate, and butylene carbonate; linear carbonates such as diethyl carbonate, dimethyl carbonate, and ethyl methyl carbonate; cyclic esters such as γ-butyrolactone and γ-valerolactone; linear esters such as ethyl acetate and methyl propionate; cyclic ethers such as tetrahydrofuran and tetrahydropyran; linear ethers such as diethyl ether, diisopropyl ether, and 1,2-dimethoxyethane; and nitriles such as acetonitrile and propionitrile. These solvents are used preferably after dehydration.

The dehydration may be performed by any method, such as a method of adsorbing water with, for example, synthetic zeolite. The moisture concentration of the non-aqueous solvent used in the present invention is preferably 100 mass ppm or less. A moisture concentration of higher than 100 mass ppm readily hydrolyzes the hexafluorophosphate and the tetrafluoro(oxalate)phosphate and is therefore undesirable. These non-aqueous solvents used in the present invention may be used alone or in any combination of two or more thereof at any mixing ratio.

The concentration of the hexafluorophosphate in the non-aqueous solvent used in the present invention is not particularly limited, and the lower limit thereof is preferably 1 mass%, more preferably 5 mass%, and the upper limit thereof is preferably 35 mass%, more preferably 30 mass%. If the content is less than 1 mass%, the resulting tetrafluoro(oxalate)phosphate solution is thin and is therefore required to be concentrated, which takes a long time, in order to be used as an electrolytic solution for a non-aqueous electrolyte battery, and is not economical. On the other hand, a content of exceeding 35 mass% does not allow the reaction to smoothly proceed because of a high viscosity, and is therefore undesirable.

The addition rate of the hexafluorophosphate is 1.90 moles or more and more preferably 1.95 moles or more per 1 mole of the silicon tetrachloride. An addition rate of less than 1.90 moles generates a large amount of difluorobis(oxalate)phosphate as a by-product. If an electrolytic solution for a non-aqueous electrolyte battery contains a large amount of difluorobis(oxalate)phosphate, an amount of gas generated during charge and discharge is high. If the addition rate is 2.00 moles or more, the excessive hexafluorophosphate remains in the solution without reacting. However, the main electrolyte in the electrolytic solution for a non-aqueous electrolyte battery is hexafluorophosphate. Accordingly, a solution previously prepared with an appropriately excessive amount of hexafluorophosphate also can be used as an electrolytic solution for a non-aqueous electrolyte battery. In such a case, the viscosity of the electrolytic solution increases with the concentration of the hexafluorophosphate remaining in the solution without reacting, resulting in a risk that the reaction does not smoothly proceed due to the too high viscosity of the solution. Accordingly, the upper limit of the addition ratio of hexafluorophosphate is preferably set such that the concentration of the hexafluorophosphate in the resulting solution after the reaction is 35 mass% or less.

The addition rate of the oxalic acid is preferably in a range of 1.90 to 2.10 moles and more preferably 1.95 to 2.05 moles per 1 mole of the silicon tetrachloride. An addition rate of less than 1.90 moles generates a large amount of nonvolatile chlorine compound as a by-product to increase the chlorine ion concentration in the resulting solution, resulting in a difficulty in the use of the solution as an additive for a non-aqueous electrolyte battery. An addition rate of higher than 2.10 moles increases the concentration of free acids in the resulting solution, resulting in a difficulty in the use of the solution as an additive for a non-aqueous electrolyte battery.

The temperature when the silicon tetrachloride is added for the reaction is preferably in a range of -10°C to 50°C, more preferably 5°C to 35°C. If the temperature for the reaction is higher than 50°C, a large amount of silicon tetrachloride volatilizes, resulting in a difficulty in achievement of a desired degree of the reaction. As a result, a low yield of tetrafluoro(oxalate)phosphate or an increase in the concentration of free acids in the resulting solution is apt to be caused. Accordingly, such temperature is not preferred. On this occasion, although the reaction can be allowed to proceed to a desired degree by further adding silicon tetrachloride, it has a risk of also generating nonvolatile chlorine compound and is also wasteful. If the temperature for the reaction is lower than -10°C, the solution has a high viscosity to reduce the reactivity, resulting in a long reaction time, which is not economical.

Silicon tetrachloride may be added by any appropriate method depending on the situation, for example, by pneumatic transportation with an inert gas or introduction with a metering pump.

The time for adding silicon tetrachloride is not particularly limited and may be any period. The silicon tetrachloride is preferably added over 1 to 10 hours. An addition time shorter than 1 hour increases the amount of silicon tetrachloride volatilizing without reacting, resulting in a difficulty in achievement of a desired degree of the reaction, which is undesirable. A time for induction of longer than 10 hours is too long and is not economical. After the addition of silicon tetrachloride, the reaction is preferably maintained further for 1 to 3 hours.

Tetrafluoro(oxalate)phosphate generated by the reaction described above is readily hydrolyzed with moisture. The reaction is therefore preferably performed in an atmosphere not containing moisture. For example, the reaction is preferably performed in an atmosphere of an inert gas such as nitrogen.

Hydrogen chloride, silicon tetrafluoride, or silicon tetrachloride contained in the tetrafluoro(oxalate)phosphate solution prepared by the above-described reaction can be removed by reducing the pressure in the reactor. In addition, undissolved materials can be removed by filtration after the pressure-reducing treatment.

The tetrafluoro(oxalate)phosphate solution after the pressure-reducing treatment and further the filtration contains chlorine compounds, free acids, or hexafluorophosphate not removed by the pressure-reducing treatment and filtration. As a result, a tetrafluoro(oxalate)phosphate solution in which the amounts of chlorine compounds (chlorine ions) and free acids are low can be obtained, wherein the amounts thereof are low such that the amount of the chlorine compounds is 5 mass ppm or less in terms of a chlorine ion concentration and the amount of the free acids is 250 mass ppm or less in terms of hydrofluoric acid, based on 1 mass% of tetrafluoro(oxalate)phosphate. The use of a tetrafluoro (oxalate) phosphate solution containing higher than 5 mass ppm of chlorine ions or higher than 250 mass ppm of free acids as an additive for a non-aqueous electrolyte battery has a risk of adversely affecting the characteristics of the non-aqueous electrolyte battery and is undesirable.

The method for producing atetrafluoro(oxalate)phosphate solution as an electrolytic solution for a non-aqueous electrolyte battery is not limited in particular. A desired electrolytic solution for a non-aqueous electrolyte battery can be obtained by adding the non-aqueous solvent, a main electrolyte, or other additives to the tetrafluoro(oxalate)phosphate solution prepared by the production method of the present invention so as to give predetermined concentrations. Examples of the main electrolyte to be added to lithium-ion batteries include electrolyte lithium salts such as LiPF₆, LiBF₄, LiClO₄, LiAsF₆, LiSbF₆, LiCF₃SO₃, LiN(SO₂F)₂, LiN(SO₂CF₃)₂, LiN (SO₂C₂F₅)₂, LiN (SO₂CF₃) (SO₂C₄F₉) , LiC (SO₂CF₃)₃, LiPF₃ (C₃F₇)₃, LiB(CF₃)₄, and LiBF₃(C₂F₅). Examples of the other additives to be added to lithium-ion batteries include compounds having an overcharge preventing effect, an anode film forming effect, and a cathode protecting effect, such as lithium difluorobis(oxalate)phosphate, lithium difluoro(oxalate)borate, cyclohexylbenzene, biphenyl, t-butylbenzene, vinylene carbonate, vinylethylene carbonate, difluoroanisole, fluoroethylene carbonate, propane sultone, and dimethylvinylene carbonate. Alternatively, a mixture solution of the tetrafluoro(oxalate)phosphate prepared by the present invention and hexafluorophosphate may be used as an electrolytic solution for a non-aqueous electrolyte battery.

### Examples:

The present invention will now be specifically described by examples, but is not limited to the following examples.

### Example 1

In a glove box with a dew point of -50°C, 460 g of diethyl carbonate (DEC) dehydrated to a moisture of 10 mass ppm was introduced into a 1000-mL three-neck flask, and 76.0 g of lithium hexafluorophosphate (LiPF₆) was added thereto and dissolved therein while stirring. Subsequently, 45.0 g of oxalic acid dehydrated to a moisture of 150 mass ppm was added thereto. The three-neck flask was taken out from the glove box and was then immersed in a water bath set at 25°C, and the mixture was sufficiently stirred. Subsequently, 42.5 g of silicon tetrachloride was introduced into a flask with a cock, and a septum was attached to the inlet. A cannula was stuck into the septum, and the cock was opened to introduce a nitrogen gas into the flask for pneumatically transporting silicon tetrachloride into the mixture solution of lithium hexafluorophosphate, oxalic acid, and diethyl carbonate through the cannula over an hour by dropwise addition. Gases of silicon tetrafluoride and hydrogen chloride were generated coincidently with the start of the dropwise addition. The generated gases were sent to a can loaded with soda lime and were absorbed by the soda lime. The dissolution of the undissolved oxalic acid was caused, and the reaction further proceeded. After the completion of the addition, the stirring was continued for an hour to complete the reaction. In this example, the addition ratio of lithium hexafluorophosphate (shown in the column of "addition ratio of hexafluorophosphate" in Table 1) was controlled such that the amount of lithium hexafluorophosphate was 2.00 moles per 1 mole of silicon tetrachloride, and the addition ratio of oxalic acid (shown in the column of "addition ratio of oxalic acid" in Table 1) was controlled such that the amount of oxalic acid was 2.00 moles per 1 mole of silicon tetrachloride. Diethyl carbonate was distilled away from the resulting reaction solution at 50°C under a reduced pressure of 133 Pa. Subsequently, the three-neck flask was placed in a glove box, and the diethyl carbonate solution was filtered through a membrane filter. Several drops of the filtrate were introduced into an NMR tube, an internal standard was added thereto, and Acetonitrile-d3 was further added thereto and dissolved therein, followed by NMR measurement. The content percentage of each compound contained in the filtrate was calculated from the integral ratio of the NMR data. The filtrate contained 30 mass% of lithium tetrafluoro(oxalate)phosphate and 0.2 mass% of lithium hexafluorophosphate. The yield of the lithium tetrafluoro(oxalate)phosphate was 99% based on the charged quantity of lithium hexafluorophosphate.

The chlorine ion concentration of the filtrate was measured by fluorescent X-ray analysis. The chlorine ion concentration of the filtrate was determined and was divided by the concentration of lithium tetrafluoro(oxalate)phosphate to convert into 0.4 mass ppm per 1 mass% of lithium tetrafluoro(oxalate)phosphate. The concentration is shown in the column "chlorine ion concentration" of Table 1.

The concentration of free acids of the filtrate was measured by a titration method. The free acid concentration in the filtrate was divided by the concentration of lithium tetrafluoro(oxalate)phosphate to convert into 20 mass ppm in terms of hydrofluoric acid per 1 mass% of lithium tetrafluoro(oxalate)phosphate. The concentration is shown in the column "free acid concentration" of Table 1.

**[Table 1]**

| | Hexafluoro-phosphat | Non-aqueous solvent | Addition ratio of hexafluoro-phosphate (mole) | Addition ratio of oxalic acid (mole) | Reaction temp. (°C) | Tetrafluoro(oxalate)-phosphate solution | | Yield of tetrafluoro-(oxalate)-phosphate (%) | Note |
|---|---|---|---|---|---|---|---|---|---|
| | | | | | | Chlorine ion conc. (mass ppm) | Free acid conc. (mass ppm) | | |
| Example 1 | LiPF₆ | DEC | 2.00 | 2.00 | 25 | 0.4 | 20 | 99 | |
| Example 2 | LiPF₆ | DEC | 2.00 | 2.08 | 25 | 0.4 | 70 | 99 | |
| Example 3 | LiPF₆ | EMC | 2.00 | 1.92 | 25 | 4.5 | 20 | 95 | |
| Example 4 | LiPF₆ | AcOEt | 1.92 | 2.00 | 25 | 1.3 | 80 | 99 | |
| Example 5 | LiPF₆ | DEC | 5.00 | 2.00 | 25 | 0.4 | 40 | 39 | |
| Example 6 | NaPF₆ | DMC | 2.00 | 2.00 | 45 | 0.6 | 70 | 98 | |
| Example 7 | KPF₆ | DEC | 2.00 | 2.00 | 0 | 3.2 | 70 | 95 | |
| Example 8 | (Et)₄NPF₆ | THF | 2.00 | 2.00 | 20 | 0.4 | 30 | 99 | |
| Example 9 | LiPF₆ | AcOMe | 2.00 | 2.00 | 25 | 0.4 | 30 | 99 | |
| Example 10 | LiPF₆ | MeCN | 2.00 | 2.00 | 25 | 0.4 | 30 | 99 | |
| Example 11 | LiPF₆ | DEC | 2.00 | 2.00 | -15 | 4 | 220 | 90 | Reaction time of 96 hours was needed because of low reactivity |
| Example 12 | LiPF₆ | DEC | 2.00 | 2.00 | 60 | 1.2 | 190 | 91 | |
| Comparative Example 1 | LiPF₆ | DEC | 2.00 | 2.50 | 25 | 0.6 | 300 | 99 | |
| Comparative Example 2 | LiPF₆ | DEC | 2.00 | 1.80 | 25 | 80 | 30 | 89 | |
| Comparative Example 3 | LiPF₆ | DEC | 1.85 | 2.00 | 25 | 0.3 | 40 | 92 | 2.8 mass% of LiPF₂(O_{X})₂ was generated as by-product |

### Example 2

Synthesis was performed as in Example 1 except that 46.8 g of oxalic acid was used at a molar ratio of oxalic acid to silicon tetrachloride of 1 : 2.08; and NMR measurement, chlorine ion concentration measurement, and free acid concentration measurement were performed as in Example 1. The content percentage of each compound contained in the filtrate was calculated from the integral ratio of the NMR data. The filtrate contained 31 mass% of lithium tetrafluoro(oxalate)phosphate and 0.2 mass% of lithium hexafluorophosphate. The measurement results of yield, chlorine ion concentration, and free acid concentration are shown in Table 1.

### Example 3

Synthesis was performed as in Example 1 except that 43.2 g of oxalic acid was used at a molar ratio of oxalic acid to silicon tetrachloride of 1 : 1.92, and ethyl methyl carbonate (EMC) was used as the non-aqueous solvent; and NMR measurement, chlorine ion concentration measurement, and free acid concentration measurement were performed as in Example 1. The content percentage of each compound contained in the filtrate was calculated from the integral ratio of the NMR data. The filtrate contained 29 mass% of lithium tetrafluoro(oxalate)phosphate and 1.4 mass% of lithium hexafluorophosphate. The measurement results of yield, chlorine ion concentration, and free acid concentration are shown in Table 1.

### Example 4

Synthesis was performed as in Example 1 except that 73.0 g of lithium hexafluorophosphate was used at a molar ratio of lithium hexafluorophosphate to silicon tetrachloride of 1 : 1.92, and ethyl acetate (AcOEt) was used as the non-aqueous solvent; and NMR measurement, chlorine ion concentration measurement, and free acid concentration measurement were performed as in Example 1. The content percentage of each compound contained in the filtrate was calculated from the integral ratio of the NMR data. The filtrate contained 30 mass% of lithium tetrafluoro (oxalate) phosphate, 0. 1 mass% of lithium hexafluorophosphate, and 0.1 mass% of lithium difluorobis(oxalate)phosphate. The measurement results of yield, chlorine ion concentration, and free acid concentration are shown in Table 1.

### Example 5

Synthesis was performed as in Example 1 except that 190.0 g of lithium hexafluorophosphate was used at a molar ratio of lithium hexafluorophosphate to silicon tetrachloride of 1 : 5.00; and NMR measurement, chlorine ion concentration measurement, and free acid concentration measurement were performed as in Example 1. The content percentage of each compound contained in the filtrate was calculated from the integral ratio of the NMR data. The filtrate contained 9 mass% of lithium tetrafluoro(oxalate)phosphate and 23 mass% of lithium hexafluorophosphate. The measurement results of yield, chlorine ion concentration, and free acid concentration are shown in Table 1.

### Example 6

Synthesis was performed as in Example 1 except that 460 g of dimethyl carbonate (DMC) was used instead of diethyl carbonate (DEC), 84.0 g of sodium hexafluorophosphate (NaPF₆) was used instead of lithium hexafluorophosphate (LiPF₆), and the temperature of the water bath was set at 45°C; and NMR measurement, chlorine ion concentration measurement, and free acid concentration measurement were performed as in Example 1. The content percentage of each compound contained in the filtrate was calculated from the integral ratio of the NMR data. The filtrate contained 31 mass% of sodium tetrafluoro(oxalate)phosphate and 0.6 mass% of sodium hexafluorophosphate. The measurement results of yield, chlorine ion concentration, and free acid concentration are shown in Table 1.

### Example 7

Synthesis was performed as in Example 1 except that 92.0 g of potassium hexafluorophosphate (KPF₆) was used instead of lithium hexafluorophosphate (LiPF₆), and the temperature of the water bath was set at 0°C; and NMR measurement, chlorine ion concentration measurement, and free acid concentration measurement were performed as in Example 1. The content percentage of each compound contained in the filtrate was calculated from the integral ratio of the NMR data. The filtrate contained 29 mass% of potassium tetrafluoro(oxalate)phosphate and 1.2 mass% of potassium hexafluorophosphate. The measurement results of yield, chlorine ion concentration, and free acid concentration are shown in Table 1.

### Example 8

Synthesis was performed as in Example 1 except that 450 g of tetrahydrofuran (THF) dehydrated to a moisture of 30 mass ppm was used instead of diethyl carbonate (DEC), 137.6 g of tetraethylammonium hexafluorophosphate ((Et)₄NPF₆) was used instead of lithium hexafluorophosphate (LiPF₆), and the temperature of the water bath was set at 20°C; and NMR measurement, chlorine ion concentration measurement, and free acid concentration measurement were performed as in Example 1. The content percentage of each compound contained in the filtrate was calculated from the integral ratio of the NMR data. The filtrate contained 33 mass% of tetraethylammonium tetrafluoro(oxalate)phosphate and 0.3 mass% of tetraethylammonium hexafluorophosphate. The measurement results of yield, chlorine ion concentration, and free acid concentration are shown in Table 1.

### Example 9

Synthesis was performed as in Example 1 except that 450 g of methyl acetate (AcOMe) dehydrated to a moisture of 30 mass ppm was used instead of diethyl carbonate (DEC), and 114.1 g of lithium hexafluorophosphate, 67. 6 g of oxalic acid, and 63.8 g of silicon tetrachloride were used; and NMR measurement, chlorine ion concentration measurement, and free acid concentration measurement were performed as in Example 1. The content percentage of each compound contained in the filtrate was calculated from the integral ratio of the NMR data. The filtrate contained 32 mass% of lithium tetrafluoro(oxalate)phosphate and 0.2 mass% of lithium hexafluorophosphate. The measurement results of yield, chlorine ion concentration, and free acid concentration are shown in Table 1.

### Example 10

Synthesis was performed as in Example 9 except that acetonitrile (MeCN) dehydrated to a moisture of 30 mass ppm was used as the non-aqueous solvent; and NMR measurement, chlorine ion concentration measurement, and free acid concentration measurement were performed as in Example 9. The content percentage of each compound contained in the filtrate was calculated from the integral ratio of the NMR data. The filtrate contained 31 mass% of lithium tetrafluoro(oxalate)phosphate and 0.2 mass% of lithium hexafluorophosphate. The measurement results of yield, chlorine ion concentration, and free acid concentration are shown in Table 1.

### Example 11

Synthesis was performed as in Example 1 except that the reaction temperature was -15°C, but since the reactivity was low, the reaction was performed for 96 hours after the addition of silicon tetrachloride. NMR measurement, chlorine ion concentration measurement, and free acid concentration measurement were performed as in Example 1. The content percentage of each compound contained in the filtrate was calculated from the integral ratio of the NMR data. The filtrate contained 30 mass% of lithium tetrafluoro(oxalate)phosphate and 3 mass% of lithium hexafluorophosphate. The measurement results of yield, chlorine ion concentration, and free acid concentration are shown in Table 1.

### Example 12

Synthesis was performed as in Example 1 except that the reaction temperature was 60°C; and NMR measurement, chlorine ion concentration measurement, and free acid concentration measurement were performed as in Example 1. The content percentage of each compound contained in the filtrate was calculated from the integral ratio of the NMR data. The filtrate contained 30 mass% of lithium tetrafluoro(oxalate)phosphate and 2 mass% of lithium hexafluorophosphate. The measurement results of yield, chlorine ion concentration, and free acid concentration are shown in Table 1.

### Comparative Example 1

Synthesis was performed as in Example 1 except that 56.3 g of oxalic acid was used such that the addition amount of the oxalic acid was 2. 50 moles per 1 mole of silicon tetrachloride; and NMR measurement, chlorine ion concentration measurement, and free acid concentration measurement were performed as in Example 1. The content percentage of each compound contained in the filtrate was calculated from the integral ratio of the NMR data. The filtrate contained 32 mass% of lithium tetrafluoro(oxalate)phosphate and 0.2 mass% of lithium hexafluorophosphate. The measurement results of yield, chlorine ion concentration, and free acid concentration are shown in Table 1. When an excessive amount of oxalic acid was used in such a manner that the addition amount of the oxalic acid was higher than 2.10 moles per 1 mole of silicon tetrachloride, the resulting solution had a too high free acid concentration and was difficult to use as an additive for a non-aqueous electrolyte battery.

### Comparative Example 2

Synthesis was performed as in Example 1 except that 40.5 g of oxalic acid was used such that the addition amount of the oxalic acid was 1.80 moles per 1 mole of silicon tetrachloride; and NMR measurement, chlorine ion concentration measurement, and free acid concentration measurement were performed as in Example 1. The content percentage of each compound contained in the filtrate was calculated from the integral ratio of the NMR data. The filtrate contained 31 mass% of lithium tetrafluoro(oxalate)phosphate and 3.1 mass% of lithium hexafluorophosphate. The measurement results of yield, chlorine ion concentration, and free acid concentration are shown in Table 1. When the addition amount of oxalic acid was less than 1.90 moles per 1 mole of silicon tetrachloride, the amount of the silicon tetrachloride was excessive to generate a large amount of nonvolatile chlorine compounds as a by-product, and the resulting solution had a too high concentration of chlorine ions and was difficult to use as an additive for a non-aqueous electrolyte battery.

### Comparative Example 3

Synthesis was performed as in Example 1 except that 70.3 g of lithium hexafluorophosphate was used such that the addition amount of the lithium hexafluorophosphate was 1.85 moles per 1 mole of silicon tetrachloride; and NMR measurement, chlorine ion concentration measurement, and free acid concentration measurement were performed as in Example 1. The content percentage of each compound contained in the filtrate was calculated from the integral ratio of the NMR data. The filtrate contained 30 mass% of lithium tetrafluoro(oxalate)phosphate, 2.8 mass% of lithium difluorobis(oxalate)phosphate, and 0.1 mass% of lithium hexafluorophosphate. The measurement results of yield, chlorine ion concentration, and free acid concentration are shown in Table 1. When the addition amount of hexafluorophosphate was less than 1.90 moles per 1 mole of silicon tetrachloride, the amounts of the oxalic acid and silicon tetrachloride were excessive to provide a solution containing a large amount of difluorobis(oxalate)phosphate as a by-product.

## Claims

1. A method of producing a tetrafluoro(oxalate)phosphate solution, comprising:
mixing a hexafluorophosphate with oxalic acid in a non-aqueous solvent; and then
adding silicon tetrachloride to the resulting mixture solution for reaction,
wherein the addition ratio of the hexafluorophosphate, oxalic acid, and silicon tetrachloride is controlled such that the amount of the hexafluorophosphate is 1.90 moles or more and the amount of the oxalic acid is 1.90 to 2.10 moles, based on 1 mole of silicon tetrachloride.

2. The method of producing a tetrafluoro(oxalate)phosphate solution according to Claim 1, wherein the temperature when the silicon tetrachloride is added for reaction is in a range of -10°C to 50°C.

3. The method of producing a tetrafluoro(oxalate)phosphate solution according to Claim 1 or 2, wherein the reaction solution after the reaction which follows the addition of the silicon tetrachloride is deaerated and concentrated.

4. The method of producing a tetrafluoro(oxalate)phosphate solution according to any one of Claims 1 to 3, wherein the non-aqueous solvent is at least one solvent selected from the group consisting of cyclic carbonates, linear carbonates, cyclic esters, linear esters, cyclic ethers, linear ethers, and nitriles.

5. The method of producing a tetrafluoro(oxalate)phosphate solution according to any one of Claims 1 to 4, wherein a counter cation of the hexafluorophosphate is at least one counter cation selected from the group consisting of lithium ions, sodium ions, potassium ions, and tetraalkylammonium ions.

6. A method of producing a tetrafluoro(oxalate)phosphate solution according to any one of Claims 1 to 5, wherein the tetrafluoro(oxalate)phosphate solution has a chlorine ion concentration of 5 mass ppm or less and a free acid concentration of 250 mass ppm or less in terms of a hydrofluoric acid, based on 1 mass% of the tetrafluoro(oxalate)phosphate.

7. A method of producing an electrolytic solution for a non-aqueous electrolyte battery, comprising adding an electrolyte selected from the group consisting of LiPF₆, LiBF₄, LiClO₄, LiAsF₆, LiSbF₆, LiCF₃SO₃, LiN(SO₂F)₂, LiN(SO₂CF₃)₂, LiN(SO₂C₂F₅)₂, LiN(SO₂CF₃) (SO₂C₄F₉), LiC (SO₂CF₃)₃, LiPF₃(C₃F₇)₃, LiB(CF₃)₄ and LiBF₃(C₂F₅) to the tetrafluoro (oxalate) phosphate solution prepared according to any of Claims 1 to 6.

8. A method of producing a non-aqueous electrolyte battery comprising using the electrolytic solution for a non-aqueous electrolyte battery according to Claim 7.

## Patentansprüche

1. Verfahren zum Herstellen einer Tetrafluor(oxalat)phosphatlösung, umfassend:
Mischen von Hexafluorphosphat mit Oxalsäure in einem nicht wässrigen Lösungsmittel; und dann
Zugeben von Siliciumtetrachlorid zu der resultierenden Mischlösung zur Reaktion,
wobei das Zugabeverhältnis von dem Hexafluorphosphat, der Oxalsäure und dem Siliciumtetrachlorid derart gesteuert wird, dass, bezogen auf 1 Mol Siliciumtetrachlorid, die Menge des Hexafluorphophats 1,90 Mol oder mehr beträgt und die Menge der Oxalsäure 1,90 bis 2,10 Mol beträgt.

2. Verfahren zum Herstellen einer Tetrafluor(oxalat)phosphatlösung nach Anspruch 1, wobei die Temperatur, wenn das Siliciumtetrachlorid zur Reaktion zugegeben wird, in einem Bereich von -10°C bis 50°C liegt.

3. Verfahren zum Herstellen einer Tetrafluor(oxalat)phosphatlösung nach Anspruch 1 oder 2, wobei die Reaktionslösung nach der Reaktion, die der Zugabe von Siliciumtetrachlorid folgt, entgast und konzentriert wird.

4. Verfahren zum Herstellen einer Tetrafluor(oxalat)phosphatlösung nach einem der Ansprüche 1 bis 3, wobei das nichtwässrige Lösungsmittel zumindest ein Lösungsmittel, ausgewählt aus der Gruppe, bestehend aus zyklischen Carbonaten, linearen Carbonaten, zyklischen Estern, linearen Estern, zyklischen Ethern, linearen Ethern und Nitrilen, ist.

5. Verfahren zum Herstellen einer Tetrafluor(oxalat)phosphatlösung nach einem der Ansprüche 1 bis 4, wobei ein Gegenkation des Hexafluorphosphats zumindest ein Gegenkation, ausgewählt aus der Gruppe, bestehend aus Lithiumionen, Natriumionen, Kaliumionen und Tetraalkylammoniumionen, ist.

6. Verfahren zum Herstellen einer Tetrafluor(oxalat)phosphatlösung nach einem der Ansprüche 1 bis 5, wobei die Tetrafluor(oxalat)phosphatlösung eine Chlorionenkonzentration von 5 Masse-ppm oder weniger und eine freie Säurekonzentration von 250 Masse-ppm oder weniger in Form von Fluorwasserstoffsäure, bezogen auf 1 Masse-% des Tetrafluor(oxalat)phosphats aufweist.

7. Verfahren zum Herstellen einer elektrolytischen Lösung für eine Batterie mit nicht wässrigem Elektrolyten, umfassend Zugeben eines Elektrolyts, ausgewählt aus der Gruppe, bestehend aus LiPF₆, LiBF₄, LiClO₄, LiAsF₆, LiSbFₛ, LiCF₃SO₃, LiN(SO₂F)₂, LiN(SO₂CF₃)₂, LiN(SO₂C₂F₅)₂, LiN(SO₂CF₃) (SO₂C₄F₉), LiC(SO₂CF₃)₃, LiPF₃(C₃F₇)₃, LiB(CF₃)₄ und LiBF₃(C₂F₅) zu der Tetrafluor(oxalat)phosphatlösung, die nach einem der Ansprüche 1 bis 6 hergestellt wird.

8. Verfahren zum Herstellen einer Batterie mit nicht wässrigem Elektrolyten, umfassend die Verwendung der elektrolytischen Lösung für eine Batterie mit nicht wässrigem Elektrolyten nach Anspruch 7.

## Revendications

1. Procédé de production d'une solution de tétrafluoro(oxalate)phosphate, comprenant le fait :
de mélanger un hexafluorophosphate avec de l'acide oxalique dans un solvant non aqueux ; et ensuite
d'ajouter du tétrachlorure de silicium à la solution de mélange résultante pour la réaction,
dans lequel le rapport d'ajout de l'hexafluorophosphate, de l'acide oxalique et du tétrachlorure de silicium est régulé de sorte que la quantité de l'hexafluorophosphate soit supérieure ou égale à 1,90 mole et la quantité de l'acide oxalique soit comprise entre 1,90 à 2,10 moles, par rapport à 1 mole de tétrachlorure de silicium.

2. Procédé de production d'une solution de tétrafluoro(oxalate)phosphate selon la revendication 1, dans lequel la température, lorsque le tétrachlorure de silicium est ajouté pour la réaction, se trouve dans une plage allant de -10°C à 50°C.

3. Procédé de production d'une solution de tétrafluoro(oxalate)phosphate selon la revendication 1 ou 2, dans lequel la solution de réaction, après la réaction qui suit l'ajout du tétrachlorure de silicium, est désaérée et concentrée.

4. Procédé de production d'une solution de tétrafluoro(oxalate)phosphate selon l'une quelconque des revendications 1 à 3, dans lequel le solvant non aqueux est au moins un solvant choisi dans le groupe consistant en des carbonates cycliques, des carbonates linéaires, des esters cycliques, des esters linéaires, des éthers cycliques, des éthers linéaires et des nitriles.

5. Procédé de production d'une solution de tétrafluoro(oxalate)phosphate selon l'une quelconque des revendications 1 à 4, dans lequel un contre-cation de l'hexafluorophosphate est au moins un contre-cation choisi dans le groupe consistant en des ions lithium, des ions sodium, des ions potassium et des ions tétraalkylammonium.

6. Procédé de production d'une solution de tétrafluoro(oxalate)phosphate selon l'une quelconque des revendications 1 à 5, dans lequel la solution de tétrafluoro(oxalate)phosphate a une concentration en ions chlore inférieure ou égale à 5 ppm en masse et une concentration en acide libre inférieure ou égale à 250 ppm en masse en termes d'acide fluorhydrique, par rapport à 1 % en masse du tétrafluoro(oxalate)phosphate.

7. Procédé de production d'une solution électrolytique pour une batterie à électrolyte non aqueux, comprenant le fait d'ajouter un électrolyte choisi dans le groupe consistant en LiPF₆, LiBF₄, LiClO₄, LiAsF₆, LiSbF₆, LiCF₃SO₃, LiN(SO₂F)₂, LiN(SO₂CF₃)₂, LiN(SO₂C₂F₅₎₂, LiN(SO₂CF₃) (SO₂C₄F₉), LiC(SO₂CF₃)₃, LiPF₃ (C₃F₇)₃, LiB (CF₃)₄ et LiBF₃(C₂F₅) à la solution de tétrafluoro(oxalate)phosphate préparée selon l'une des revendications 1 à 6.

8. Procédé de production d'une batterie à électrolyte non aqueux comprenant le fait d'utiliser la solution électrolytique pour une batterie à électrolyte non aqueux selon la revendication 7.
